# FASCICULE DE BREVET EUROPEEN

(11) **EP 1 216 197 B1**
(45) Date de publication et mention de la délivrance du brevet: **01.09.2004**
(21) Numéro de dépôt: 00935251.9
(22) Date de dépôt: 23.05.2000
(51) Int. Cl.: B65G 47/90, B29C 49/42

(54) **SYSTEME DE CONVOYAGE D'EBAUCHES DANS UNE INSTALLATION DE SOUFFLAGE DE RECIPIENTS**
TRANSPORTVORRICHTUNG FÜR VORFORMLINGE IN EINE VORRICHTUNG ZUR HERSTELLUNG VON BEHÄLTERN DURCH BLASFORMEN
SYSTEM FOR CONVEYING BLANKS TO A BLOWING INSTALLATION FOR CONTAINERS

(30) Priorité: 27.05.1999 FR 9906816
(43) Date de publication de la demande: 26.06.2002
(73) Titulaire: SIDEL, 76053 Le Havre Cedex (FR)
(72) Inventeur: PELLEGATTA, Jean-Louis, F-76053 Le Havre Cedex (FR); GALLONI, Bruno, F-76053 Le Havre Cedex (FR)
(74) Mandataire: Siloret, Patrick
(86) Numéro de dépôt international: PCT/FR2000/001404
(87) Numéro de publication internationale: WO 2000/073179

(56) Documents cités:
- FR-A- 2 728 547
- US-A- 3 777 875
- US-A- 3 945 486
- US-A- 4 675 070
- US-A- 5 200 134

## Description

L'invention se rapporte au domaine des procédés de fabrication de corps creux en matériau thermoplastique dans lesquels on fabrique d'abord une préforme par injection avant d'obtenir le récipient final au cours d'un procédé comportant au moins une étape de soufflage.

La préforme obtenue par injection présente généralement un corps cylindrique tubulaire qui est fermé à l'une de ses extrémités axiales et qui est prolongé à son autre extrémité par un col, lui aussi tubulaire. Le col est généralement injecté de manière à posséder déjà sa forme définitive tandis que le corps de la préforme est appelé à subir une déformation relativement importante pour former le récipient final suite à l'opération de soufflage.

Ces procédés concernent tout particulièrement la fabrication de récipients en polyéthylène téréphtalate (PET).

Il existe plusieurs variantes de procédés appartenant à cette famille. En fonction du procédé mis en oeuvre, l'installation de fabrication correspondante comprend un ou plusieurs fours de conditionnement thermique.

Dans tous les procédés concernés, l'opération de soufflage du corps de la préforme nécessite que celui-ci soit porté à une température supérieure à la température de transition vitreuse du matériau. A cet effet, on procède à un conditionnement thermique de la préforme en la faisant circuler à l'intérieur d'un four. Le four comporte des moyens de chauffage qui sont par exemple formés de lampes à infrarouge devant lesquelles la préforme est déplacée par un élément de transport. De manière avantageuse, il est prévu que la préforme soit mise en rotation sur elle-même lors de son parcours dans le four.

Les préformes sont généralement maintenues sur l'élément de transport par un dispositif de préhension formé d'un mandrin qui est engagé à l'intérieur du col de la préforme et qui maintient cette dernière par serrage contre la face interne du col. Toutefois, dans certains cas, la prise de la préforme se fait par la face externe du col.

Dans certains de ces procédés, on cherche à augmenter la tenue en température du corps du récipient final en augmentant le taux de cristallinité du PET. Cela est obtenu en faisant d'abord subir à la préforme une première étape de soufflage pour obtenir un récipient intermédiaire qui est soumis à son tour à une étape de chauffage dans un four de traitement thermique, étape au cours de laquelle il se rétrécit. Ce récipient rétréci subit une seconde étape de soufflage qui lui donne la forme du récipient final.

Dans d'autre procédés, c'est le col de la préforme, du récipient final ou d'un récipient intermédiaire que l'on souhaite chauffer pour en augmenter la cristallinité. Pour cela, l'installation comporte un four de traitement thermique adapté.

Dans tous les cas, on voit donc que les installations de fabrication de récipients en matière thermoplastique peuvent comporter plusieurs types de four de traitement thermiques, ces fours étant bien entendu adaptés au traitement thermique à réaliser. Cependant, tous ces fours comportent un système de convoyage.

Ces différents systèmes sont donc destinés à convoyer des objets correspondant à différentes phases de la production du récipient final, Cependant, ils sont tous destinés à saisir cet objet par le col, lequel ne subit pas de variation fondamentale de sa géométrie, même si certains traitements conduisent à une modification de la structure de la matière constitutive du col. Aussi, dans la suite du texte on utilisera indifféremment le terme de préforme, d'ébauche ou de bouteille pour désigner t'objet destiné à être traiter dans le four.

Selon une technique connue, le système de convoyage peut par exemple être constitué d'une chaîne de maillons de transports animée d'un mouvement continu sur elle-même.

Pour saisir la préforme, un élément de transport comporte un dispositif de préhension qui est mobile axialement par rapport à l'élément de transport et qui, lorsqu'il est amené d'une position extrême dégagée à une position extrême de préhension, s'engage axialement sur le col de l'ébauche.

Pour cela, l'ébauche doit être amenée en dessous de l'élément de transport correspondant et elle doit être maintenue parfaitement à la verticale de celui-ci pendant toute la durée de l'opération de saisie. Or, au cours de cette durée, l'élément de transport se déplace de manière continue, si bien que l'ébauche doit elle aussi être déplacée de manière continue.

A cet effet, l'ébauche est par exemple prise en charge par une roue de chargement comportant un disque qui est entraîné en rotation autour de son axe et qui est muni, à sa périphérie, d'encoches sensiblement semi-circulaires. Un guide en arc de cercle est agencé autour d'une partie de la périphérie du disque de telle sorte qu'une ébauche puisse être emprisonnée radialement entre une encoche du disque et le guide. L'ébauche prend alors appui par une collerette située à la base de son col à la fois sur le disque et sur le guide, le col et le corps de la préforme s'étendant respectivement au-dessus et en dessous du niveau du disque. Ainsi, la préforme est portée par la roue de chargement et, du fait de la rotation du disque, elle est entraînée selon une trajectoire circulaire.

La roue de chargement est disposée de manière que la trajectoire circulaire de la préforme soit en un point tangente à la direction de déplacement du système de convoyage. Les mouvements de la roue et des éléments de transport sont synchronisés de manière à ce que, en ce point de tangence, l'ébauche soit agencée axialement juste à la verticale du dispositif de préhension d'un des éléments de transport. Ainsi, en ce point le dispositif de préhension peut être commandé vers sa position basse pour saisir l'ébauche par le col.

On note donc que, au point de tangence, l'ébauche est encore en appui sur la roue de chargement et sur le guide, lequel s'achève juste après ce point pour permettre à l'ébauche de suivre sa nouvelle trajectoire qui est celle de l'élément de transport.

En théorie, au niveau du point de chargement, l'ébauche est donc en appui par sa collerette sur la roue de chargement et sa position est parfaitement définie par l'encoche du disque dans la quelle elle se trouve prisonnière.

Cependant, dans la pratique, il est nécessaire de prévoir des jeux de fonctionnement entre l'ébauche, le disque et le guide. L'ébauche possède donc une certaine latitude de mouvement par rapport à ces deux éléments. Or, on s'est aperçu que cette latitude permettait à l'ébauche de vibrer sur la roue de chargement, ceci étant plus particulièrement notable dans les installations à hautes cadences dans lesquelles la vitesse de déplacement de l'ébauche au niveau de la roue de chargement est relativement importante. Ces vibrations affectent la précision de la position réelle du col de l'ébauche au niveau du point de chargement si bien que, dans certains, cas, le dispositif de préhension et le col sont décalés au point d'empêcher la préhension correcte de l'ébauche.

L'invention a donc pour but de proposer des moyens qui permettent de garantir une parfaite stabilité de la préforme au moment de sa préhension par la chaîne de transport.

Dans ce but, l'invention propose un système de convoyage pour une installation de fabrication par soufflage de récipients en matériau thermoplastique, du type comportant une série d'éléments de transport munis d'au moins un dispositif de préhension destiné à porter une ébauche du récipient en vue de la faire circuler le long d'un parcours à l'intérieur de l'installation, du type dans lequel chaque dispositif de préhension est mobile axialement par rapport à l'élément de transport qui le porte pour, lorsqu'il est amené d'une position haute dégagée à une position basse de préhension, s'engager axialement sur le col de l'ébauche, l'ébauche étant alors en appui par une collerette radiale externe sur une surface d'appui, caractérisé en ce que chaque élément de transport comporte un stabilisateur qui est mobile axialement d'une position haute escamotée à une position basse pour venir en appui sur l'ébauche pour la plaquer contre la surface d'appui avant que le dispositif de préhension ne s'engage sur le col.

Selon d'autres caractéristiques de l'invention :
- les déplacements du stabilisateur entre ses positions hautes et basses sont commandés par les déplacements du dispositif de préhension ;
- le dispositif de préhension comporte un mandrin qui est destiné à s'engager axialement à l'intérieur du col de l'ébauche ; le stabilisateur comporte un alésage qui est de diamètre sensiblement identique au diamètre interne du col et dans lequel le mandrin peut coulisser axialement ; et, en position haute, le mandrin est reçu à l'intérieur du stabilisateur tandis que, en position basse de préhension, le mandrin s'étend en dehors de l'alésage, au travers d'une ouverture inférieure délimitée par un bord inférieur d'appui du stabilisateur ;
- au cours du début de sa course vers sa position de préhension, le mandrin entraîne le stabilisateur qui vient en appui par son bord inférieur contre la préforme pour la plaquer contre la surface d'appui, le mandrin poursuivant sa course jusqu'à sa position de préhension ;
- lors de sa course de retour vers sa position haute dégagée, le mandrin ramène le stabilisateur vers sa position haute escamotée ;
- le mandrin est reçu avec serrage dans l'alésage du stabilisateur de telle sorte que le mandrin entraîne le stabilisateur par adhérence ;
- le mandrin comporte une bague qui est élastique selon la direction radiale pour venir, en position haute du mandrin, en appui contre une paroi latérale de l'alésage du stabilisateur et, en position basse du mandrin, contre la surface interne du col de l'ébauche ;
- le dispositif de préhension et le stabilisateur sont liés axialement par des moyens élastiques ;
- le stabilisateur coulisse axialement dans un fourreau tubulaire de guidage qui est solidaire de l'élément de transport ; et
- le stabilisateur vient en appui sur le bord supérieur du col de l'ébauche.

L'invention concerne aussi un four de conditionnement thermique pour une installation de fabrication par soufflage de récipients en matériau thermoplastique, caractérisé en ce qu'il comporte un système de convoyage incorporant l'une quelconque des caractéristiques précédentes.

D'autres caractéristiques et avantages de l'invention apparaîtront à la lecture de la description détaillée qui suit ainsi que dans les dessins annexés dans lesquels :
- la figure 1 est une vue schématique en perspective d'un exemple de réalisation des moyens de transfert de préformes vers un système de convoyage selon l'invention ; et
- les figures 2 à 4 illustrent un élément de transport muni d'un stabilisateur de préformes conforme à l'invention, le dispositif de préhension étant illustré respectivement en position haute dégagée, dans une position intermédiaire de stabilisation, et dans sa position basse de préhension.

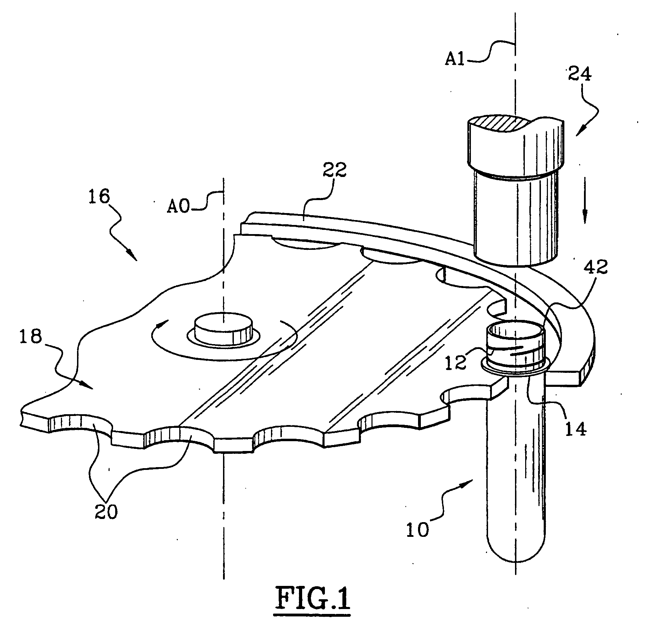

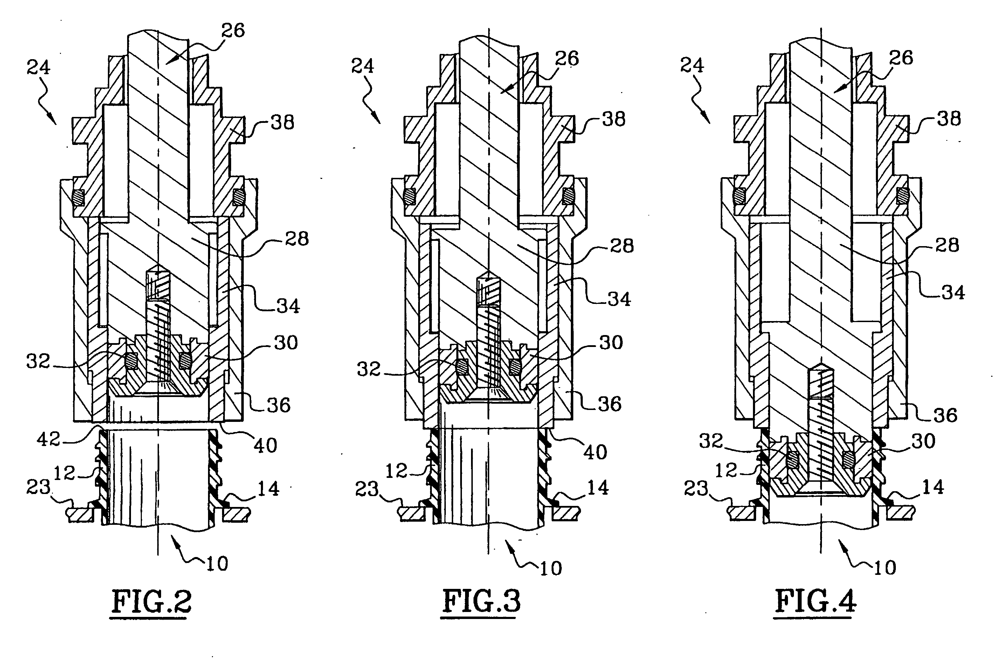

L'invention va maintenant être décrite dans le cas particulier d'un système de convoyage pour un four de traitement thermique d'une préforme 10 en matériau thermoplastique, par exemple en PET. La préforme 10 est réalisée par moulage par injection et elle présente un col 12 qui est formé directement à sa forme finale, le col comportant notamment, à sa base, une collerette radiale externe 14. Pour des raisons de clarté de la description, on considérera dans toute la suite du texte que la préforme 10 est disposée verticalement, col en haut, ainsi que cela est illustré sur les figures 1 et 2. Les termes géométriques utilisés pour décrire l'invention découlent de cette convention et ne doivent pas être considérés comme des limitations à la portée de l'invention.

On a illustré sur la figure 1 une roue de chargement 16 qui est un exemple de réalisation des moyens de transferts qui sont prévus pour amener les préformes jusqu'au four de conditionnement thermique dans une installation de soufflage de récipients. Cet exemple n'est pas limitatif quant à la portée de l'invention. La roue de chargement 16 comporte un disque horizontal 18 qui est entraîné en rotation à vitesse constante autour de son axe A0 et qui est muni, à sa périphérie externe, d'encoches 20 sensiblement semi-circulaires. Autour d'une partie de la périphérie du disque 18, on a disposé un guide fixe 22 en arc de cercle. Le disque et le guide sont séparés radialement d'une distance sensiblement égale à la moitié du diamètre du corps de la préforme en dessous de la collerette 14.

Les préformes 10 sont prévues pour être engagées chacune par des moyens d'alimentations (non représentés) dans une encoche 20 du disque 18, juste avant le début du guide en arc de cercle 22. La préforme est donc entraînée par l'encoche 22 et se retrouve alors emprisonnée radialement entre le disque 18 et le guide 22 en suivant une trajectoire circulaire autour de l'axe A0. Tout au long de cette trajectoire, la préforme 10 est en appui par sa collerette 14, sous l'effet de son seul poids, sur le disque 18 et le guide 22 qui forment une surface d'appui 23.

La roue de chargement transfère ainsi la préforme 10 jusqu'à un point de chargement au niveau duquel la trajectoire de la préforme sur la roue de chargement est sensiblement tangente à celle des éléments de transport 24 d'un système de convoyage. La préforme 10 se trouve alors agencée en dessous d'un des éléments de transport 24, selon le même axe A1 que celui-ci.

Le système de convoyage pourra par exemple être constitué de manière connue d'une chaîne de maillons, chaque maillon portant par exemple un ou deux éléments de transport. Cependant, l'invention pourra s'appliquer à tout système similaire assurant le convoyage d'une ébauche de récipient dans une installation de soufflage de récipients à partir d'une préforme préalablement injectée. Notamment, on peut prévoir que les éléments de transports soient agencés sur une couronne rotative ou qu'ils soient réalisés sous la forme de chariots indépendants.

A partir du point de tangence, qui correspond sensiblement à une extrémité du guide 22, l'élément de transport 24 est destiné à prendre en charge la préforme 10 pour, en l'occurrence, lui faire suivre un parcours à l'intérieur du four.

On a illustré sur les figures 2 à 4 trois étapes de cette opération de préhension de la préforme 10 par l'élément de transport 24.

Comme on peut le voir sur ces figures schématiques, l'élément de transport 24 comporte un dispositif de préhension 26 qui est mobile axialement entre une position haute dégagée et une position basse de préhension dans laquelle il est engagé sur le col 12 de la préforme 10. Dans l'exemple illustré, le dispositif de préhension 26 comporte, à son extrémité inférieure, un mandrin 28 qui est destiné à être engagé avec serrage à l'intérieur du col 12. Le mandrin 28 comporte une bague à secteurs 30 qui est reçue dans une gorge annulaire formée dans la surface cylindrique externe du mandrin 28. Un joint torique 32 en matériau élastomère est emprisonné radialement entre la bague 30 et le fond de la gorge, de telle sorte que les secteurs de la bague sont sollicités radialement vers l'extérieur. Ainsi, lorsque le mandrin 28 est en position basse à l'intérieur du, col 12, les secteurs de la bague 30 prennent appui sur la surface cylindrique interne du col 12, ce qui assure le maintien de la préforme 10 sur le mandrin de préhension 28. La bague 30 peut aussi être réalisée sous la forme d'une bague annulaire fendue.

Conformément aux enseignement de l'invention, l'élément de transport 24 comporte un stabilisateur 34 qui est mobile axialement pour venir en appui sur la préforme 10 avant que le mandrin 28 ne soit engagé sur le col 12. Le stabilisateur 34 est réalisé sous la forme d'un élément de tube monté à coulissement dans un fourreau de guidage 36 tubulaire qui est fixe par rapport à un corps principal 38 de l'élément de transport 24. Le fourreau de guidage 36 est bien entendu ouvert à son extrémité inférieure. L'extrémité inférieure du stabilisateur forme un bord annulaire 40 dont les dimensions correspondent au bord supérieur 42 du col 12. Ce bord supérieur 42 est celui qui délimitera l'ouverture du récipient final.

Sur la figure 2, le stabilisateur 34 est illustré dans une position haute escamotée dans laquelle il est en appui par son extrémité supérieure contre le corps fixe 38 de l'élément de transport 24.

Le stabilisateur 34 présente un alésage interne cylindrique qui est ouvert vers le haut et vers le bas et dans lequel le mandrin 28 est reçu avec une possibilité de coulissement. Le diamètre de l'alésage est sensiblement égal au diamètre interne du col 12.

Dans la position haute illustrée à la figure 2, le mandrin 28 est entièrement reçu à l'intérieur de l'alésage du stabilisateur 28 de sorte que sa bague 30 est en appui radialement contre le stabilisateur 34, ce qui est donc une source de frottement entre les deux.

Ainsi, lorsque le mandrin est déplacé vers le bas par ses moyens de commande (non représentés), il entraîne avec lui le stabilisateur 34 en direction de la préforme, jusqu'à ce que le bord inférieur 40 du stabilisateur vienne en appui contre le bord supérieur 42 du col 12 ainsi que cela est représenté à la figure 3.

Si la préforme 10 est en appui par sa collerette 14 sur la surface d'appui 23, le stabilisateur 34 se trouve bloqué axialement. Toutefois, le mandrin 28 peut continuer sa course vers le bas, sa bague 30 glissant sur la paroi cylindrique interne du stabilisateur 34. Ce glissement génère une force de frottement qui sollicite le stabilisateur vers le bas, le stabilisateur exerçant à son tour une force d'appui sur le col de la préforme. Cette force d'appui permet donc d'éliminer toute possibilité de vibration de la préforme, ce qui lui garanti une position stable et parfaitement définie avant que le mandrin ne pénètre à l'intérieur du col.

A la figure 4, on peut voir que, une fois la préforme stabilisée, le mandrin 28 peut sortir vers le bas à l'extérieur du stabilisateur pour pénétrer à l'intérieur du col, la bague 30 coopérant alors avec la surface interne de celui-ci pour rendre la préforme solidaire de l'élément de transport 24.

Une fois le mandrin engagé dans le col, la préforme 10 peut être évacuée de la roue de chargement 16 par le système de convoyage car la préforme n'a plus besoin d'être soutenue par sa collerette.

Pour décharger la préforme de l'élément de transport, deux solutions sont possibles.

On peut ainsi saisir la préforme par le col, par exemple à l'aide d'une pince ou à l'aide d'une surface de retenue qui coopérerait avec la face supérieure de la collerette 14, et commander le mandrin 28 vers le haut pour le dégager du col. Dans ce cas, une fois que la bague 30 est sortie du col, elle coopère de nouveau avec le stabilisateur pour le ramener vers sa position haute escamotée. En position escamotée, le stabilisateur est immobilisé axialement vers le haut contre le corps de l'élément de transport et le mandrin peut poursuivre son mouvement de dégagement vers le haut en pénétrant à l'intérieur de l'alésage formé dans le stabilisateur.

On peut aussi prévoir que le stabilisateur assure également une fonction d'éjecteur au moment du déchargement. Dans ce cas, on commande le mandrin vers sa position haute. La préforme, qui n'est pas retenue, suit le mouvement du mandrin en provoquant la remontée du stabilisateur jusqu'à sa position escamotée dans laquelle il est en appui contre le corps 38 de l'élément de transport 24. A partir de cette position, la préforme ne peut donc plus remonter vers le haut de sorte que le mandrin, qui poursuit sa course vers sa position dégagée, sort du col de la préforme et pénètre ensuite dans l'alésage du stabilisateur.

Dans le mode de réalisation de l'invention qui vient d'être décrit, on remarque que les déplacements du stabilisateur sont provoqués par les déplacements du mandrin 28, sans intervention d'aucun autre élément.

Toutefois, dans une variante de réalisation (non représentée), on peut par exemple prévoir que le mandrin commande la descente du stabilisateur par l'intermédiaire d'un ressort de compression interposé axialement entre les deux. Dans ce cas, lorsque le stabilisateur arrive au contact de la préforme, le ressort se trouve comprimé, ce qui crée un effort d'appui qui est transmis par le stabilisateur sur la préforme. Avec un tel mode de réalisation, il faut toutefois veiller à choisir un ressort dont la raideur ne soit pas trop importante. En effet, lorsque la préforme est dégagée de la surface d'appui 23, le ressort continue d'imposer sur la préforme un effort axial vers le bas. Si le ressort est trop raide, cet effort pourrait faire glisser la préforme par rapport au mandrin, ce qui aurait pour conséquence un mauvais positionnement axial de la préforme, voire même une chute de la préforme.

En variante on peut aussi prévoir que le stabilisateur vienne en appui sur la collerette 14 de la préforme.

Dans tous les cas, on veillera à ce que l'effort exercé par le stabilisateur sur la préforme soit relativement faible pour ne pas marquer la préforme. Cet effort devra être juste suffisant pour éviter les vibrations de la préforme.

On remarquera que dans le mode de réalisation décrit plus haut, le stabilisateur n'exerce au contraire plus aucun effort sur le préforme une fois que la bague 30 coopère avec le col 12 et plus avec le stabilisateur.

L'invention permet donc de garantir une parfaite fiabilité de l'opération de chargement des préformes sur le système de convoyage, ceci même pour des machines à hautes cadences dans lesquelles les vitesses de mouvement des pièces sont importantes.

## Revendications

1. Système de convoyage pour une installation de fabrication par soufflage de récipients en matériau thermoplastique, du type comportant une série d'éléments de transport (24) munis d'au moins un dispositif de préhension (26, 28) destiné à porter une ébauche (10) du récipient en vue de la faire circuler le long d'un parcours à l'intérieur de l'installation, du type dans lequel chaque dispositif de préhension (26, 28) est mobile axialement par rapport à l'élément de transport (24) qui le porte pour, lorsqu'il est amené d'une position haute dégagée à une position basse de préhension, s'engager axialement sur le col (12) de l'ébauche (10), l'ébauche (10) étant alors en appui par une collerette radiale externe (14) sur une surface d'appui (23),
**caractérisé en ce que** chaque élément de transport (24) comporte un stabilisateur (34) qui est mobile axialement d'une position haute escamotée à une position basse pour venir en appui sur l'ébauche (10) pour la plaquer contre la surface d'appui (23) avant que le dispositif de préhension (26, 28) ne s'engage sur le col (12).

2. Système de convoyage selon la revendication 1, **caractérisé en ce que** les déplacements du stabilisateur (34) entre ses positions hautes et basses sont commandés par les déplacements du dispositif de préhension (26, 28).

3. Système de convoyage selon l'une quelconque des revendications précédentes, **caractérisé en ce que** le dispositif de préhension (26) comporte un mandrin (28) qui est destiné à s'engager axialement à l'intérieur du col (12) de l'ébauche (10), **en ce que** le stabilisateur (34) comporte un alésage qui est de diamètre sensiblement identique au diamètre interne du col (12) et dans lequel le mandrin (28) peut coulisser axialement, et **en ce que**, en position haute, le mandrin (28) est reçu à l'intérieur du stabilisateur (34) tandis que, en position basse de préhension, le mandrin (28) s'étend en dehors de l'alésage, au travers d'une ouverture inférieure délimitée par un bord inférieur d'appui (40) du stabilisateur (34).

4. Système de convoyage selon les revendications 2 et 3 prises en combinaison, **caractérisé en ce que**, au cours du début de sa course vers sa position de préhension, le mandrin (28) entraîne le stabilisateur (34) qui vient en appui par son bord inférieur (40) contre la préforme (10) pour la plaquer contre la surface d'appui (23), le mandrin (28) poursuivant sa course jusqu'à sa position de préhension.

5. Système de convoyage selon la revendication 4, **caractérisé en ce que** lors de sa course de retour vers sa position haute dégagée, le mandrin (28) ramène le stabilisateur (34) vers sa position haute escamotée.

6. Système de convoyage selon l'une quelconque des revendications 3 à 5, **caractérisé en ce que** le mandrin (28) est reçu avec serrage dans l'alésage du stabilisateur (34) de telle sorte que le mandrin (28) entraîne le stabilisateur (34) par adhérence.

7. Système de convoyage selon la revendication 6, **caractérise en ce que** le mandrin (28) comporte une bague (30) qui est élastique selon la direction radiale pour venir, en position haute du mandrin (28), en appui contre une paroi latérale de l'alésage du stabilisateur (34) et, en position basse du mandrin (28), contre la surface interne du col (12) de l'ébauche (10).

8. Système de convoyage selon l'une quelconque des revendications 2 à 5, **caractérisé en ce que** le dispositif de préhension (26) et le stabilisateur (34) sont liés axialement par des moyens élastiques.

9. Système de convoyage selon l'une quelconque des revendications précédentes, **caractérisé en ce que** le stabilisateur (34) coulisse axialement dans un fourreau tubulaire de guidage (36) qui est solidaire de l'élément de transport (38, 24).

10. Système de convoyage selon l'une quelconque des revendications précédentes, **caractérisé en ce que** le stabilisateur (34) vient en appui sur le bord supérieur (42) du col (12) de l'ébauche (10).

11. Four de conditionnement thermique pour une installation de fabrication par soufflage de récipients en matériau thermoplastique, **caractérisé en ce qu'**il comporte un système de convoyage conforme à l'une quelconque des revendications précédentes.

## Patentansprüche

1. Fördersystem für eine Anlage zur Herstellung von Behältern aus einem Thermoplast durch Blasformen, umfassend eine Reihe von Förderelementen (24), die mit mindestens einer Greifvorrichtung (26, 28) versehen sind, die dazu bestimmt ist, einen Rohling (10) des Behälters zu tragen, um ihn entlang einer Bahn im Inneren der Anlage umlaufen zu lassen, bei dem jede Greifvorrichtung (26, 28) axial in Bezug auf das Förderelement (24), das sie trägt, beweglich ist, um, wenn sie von einer oberen Freigabeposition in eine untere Greifposition gebracht wird, axial in den Hals (12) des Rohlings (10) einzugreifen, wobei der Rohling (10) nun mit einem äußeren Radialkragen (14) auf einer Stützfläche (23) aufliegt,
**dadurch gekennzeichnet, dass** jedes Förderelement (24) einen Stabilisator (34) umfasst, der axial von einer oberen eingezogenen Position in eine untere Position beweglich ist, um auf dem Rohling (10) zur Auflage zu gelangen, um ihn gegen die Stützfläche (23) anzulegen, bevor die Greifvorrichtung (26, 28) am Hals (12) eingreift.

2. Fördersystem nach Anspruch 1, **dadurch gekennzeichnet, dass** die Verschiebungen des Stabilisators (34) zwischen seiner oberen und unteren Position durch die Verschiebungen der Greifvorrichtung (26, 28) gesteuert werden.

3. Fördersystem nach einem der vorhergehenden Ansprüche, **dadurch gekennzeichnet, dass** die Greifvorrichtung (26) einen Dorn (28) umfasst, der dazu bestimmt ist, axial in das Innere des Halses (12) des Rohlings (10) einzugreifen, dass der Stabilisator (34) eine Bohrung umfasst, die einen im Wesentlichen identischen Durchmesser wie der Innendurchmesser des Halses (12) aufweist und in der der Dorn (28) axial gleiten kann, und dass in der oberen Position der Dorn (28) im Inneren des Stabilisators (34) aufgenommen wird, während sich der Dorn (28) in der unteren Greifposition außerhalb der Bohrung durch eine untere Öffnung erstreckt, die durch einen unteren Stützrand (40) des Stabilisators (34) begrenzt ist.

4. Fördersystem nach den Ansprüchen 2 und 3 in Kombination, **dadurch gekennzeichnet, dass** der Dorn (28) während des Beginns seines Weges in seine Greifposition den Stabilisator (34) antreibt, der mit seinem unteren Rand (40) an der Vorform (10) zur Anlage kommt, um sie gegen die Stützfläche (23) anzulegen, wobei der Dorn (28) seinen Weg bis in seine Greifposition weiter verfolgt.

5. Fördersystem nach Anspruch 4, **dadurch gekennzeichnet, dass** der Dorn (28) bei seinem Rückweg in seine obere Freigabeposition den Stabilisator (34) in seine obere eingezogene Position zurückführt.

6. Fördersystem nach einem der Ansprüche 3 bis 5, **dadurch gekennzeichnet, dass** der Dorn (28) unter Festklemmen in der Bohrung des Stabilisators (34) aufgenommen wird, so dass der Dorn (28) den Stabilisator (34) durch Anhaftung antreibt.

7. Fördersystem nach Anspruch 6, **dadurch gekennzeichnet, dass** der Dorn (28) einen Ring (30) umfasst, der entlang der Radialrichtung elastisch ist, um in der oberen Position des Dorns (28) an einer Seitenwand der Bohrung des Stabilisators (34) und in der unteren Position des Dorns (28) an der Innenfläche des Halses (12) des Rohlings (10) zur Anlage zu gelangen.

8. Fördersystem nach einem der Ansprüche 2 bis 5, **dadurch gekennzeichnet, dass** die Greifvorrichtung (26) und der Stabilisator (34) axial durch elastische Mittel verbunden sind.

9. Fördersystem nach einem der vorhergehenden Ansprüche, **dadurch gekennzeichnet, dass** der Stabilisator (34) axial in einer röhrenförmigen Führungshülle (36) gleitet, die mit dem Förderelement (38, 24) verbunden ist.

10. Fördersystem nach einem der vorhergehenden Ansprüche, **dadurch gekennzeichnet, dass** der Stabilisator (34) am oberen Rand (42) des Halses (12) des Rohlings (10) zur Anlage gelangt.

11. Wärmebehandlungsofen für eine Anlage zur Herstellung von Behältern aus Thermoplast durch Blasformen, **dadurch gekennzeichnet, dass** er ein Fördersystem nach einem der vorhergehenden Ansprüche umfasst.

## Claims

1. Conveying system for a machine for manufacturing thermoplastic containers by blow moulding, of the type comprising a series of transporting elements (24) provided with at least one gripping device (26, 28) intended to carry a preform (10) of the container for the purpose of making it circulate along a path inside the machine, of the type in which each gripping device (26, 28) can move axially relative to the transporting element (24) that carries it in order, when it is taken from a disengaged high position to a gripping low position, to be engaged axially on the neck (12) of the preform (10), the preform (10) then bearing on a bearing surface (23) via an external radial flange (14),
**characterized in that** each transporting element (24) includes a stabilizer (34) which can move axially from a retracted high position to a low position in order to bear on the preform (10) in order to press it against the bearing surface (23) before the gripping device (26, 28) engages with the neck (12).

2. Conveying system according to Claim 1, **characterized in that** the displacements of the stabilizer (34) between its high and low positions are controlled by the displacements of the gripping device (26, 28).

3. Conveying system according to either of the preceding claims, **characterized in that** the gripping device (26) includes a mandrel (28) that is intended to engage axially inside the neck (12) of the preform (10), **in that** the stabilizer (34) has a bore with a diameter approximately the same as the internal diameter of the neck (12), in which bore the mandrel (28) can slide axially, and **in that**, in the high position, the mandrel (28) can side axially and **in that**, in the high position, the mandrel (28) is received inside the stabilizer (34) whereas, in the low, gripping position, the mandrel (28) extends outside the bore through a lower opening bounded by a lower bearing edge (40) of the stabilizer (34).

4. Conveying system according to Claims 2 and 3 taken in combination, **characterized in that**, during the start of its travel towards its gripping position, the mandrel (28) drives the stabilizer (34), which bears via its lower edge (40) against the preform (10) in order to press it against the bearing surface (23), the mandrel (28) continuing its travel as far as its gripping position.

5. Conveying system according to Claim 4, **characterized in that**, during its return travel back to its disengaged high position, the mandrel (28) takes the stabilizer (34) back to its retracted high position.

6. Conveying system according to any one of Claims 3 to 5, **characterized in that** the mandrel (28) is received with a tight fit in the bore of the stabilizer (34) in such a way that the mandrel (28) drives the stabilizer (34) by adhesion.

7. Conveying system according to Claim 6,
**characterized in that** the mandrel (28) includes a ring (30) that is elastic in the radial direction in order to bear, in the high position of the mandrel (28) against a side wall of the bore of the stabilizer (34) and, in the low position of the mandrel (28), against the internal surface of the neck (12) of the preform (10).

8. Conveying system according to any one of Claims 2 to 5, **characterized in that** the gripping device (26) and the stabilizer (34) are linked axially via elastic means.

9. Conveying system according to any one of the preceding claims, **characterized in that** the stabilizer (34) slides axially in a tubular guiding sheath (36) that is fastened to the transporting element (38, 24).

10. Conveying system according to any one of the preceding claims, **characterized in that** the stabilizer (34) bears on the upper edge (42) of the neck (12) of the preform (10).

11. Thermal conditioning oven for a machine for manufacturing thermoplastic containers by blow moulding, **characterized in that** it includes a conveying system according to any one of the preceding claims.
